# EUROPEAN PATENT APPLICATION

(11) **EP 2 700 377 A1**
(43) Date of publication of application: **26.02.2014**
(21) Application number: 12181013.9
(22) Date of filing: 20.08.2012
(51) Int. Cl.: A61C 8/00

(54) **Scannable body for determining the orientation and position of a dental implant**

(71) Applicant: Heraeus Kulzer GmbH, 63450 Hanau (DE)
(72) Inventor: Piasini, Bruno, 23020 Montagna in Valtellina-Sondrio (IT); Scotti, Antonio Maria, 20090 Monza e Brianza (IT)
(74) Representative: Rastelli, Franco

(57) **Abstract**

A position localizer device for oral, dental and maxillofacial prostheses, consisting of a single body with a longitudinal axis (4) and comprising a portion consisting of a body (3) in the form of an irregular polyhedron, on whose upper polygonal side (6) a portion is fixed in the form of a spherical body (2) and on whose lower polygonal side there is a connection element(18) for coupling with the interface of the respective element to be positioned. The polyhedric body (3), the spherical body (2) and the mentioned connection (18) of the device of the invention are positioned coaxial with said axis (4) of the body of the same localizer device (1).

With respect to the known art considered above, the localizer of the invention offers the advantage of obtaining a perfect adherence between the surfaces scanned and the surfaces of the device itself and the perfect coupling of the scanned surfaces with the mathematical model present in the database.

## Description

The present invention relates to a position localizer device of the enhanced type, suitable for use in oral, dental and maxillofacial prostheses.

### Field of the invention

The field of application of the invention is that of devices which are used for reproducing the natural position of the same devices and of an element connected to these, for example a dental implant in a patient's mouth or on models which reproduce it. In particular, the devices to which the invention relates serve to reproduce, in the form of a mathematical model, the position and orientation in space of an osteo-integrated implant in a patient's mouth or on the models reproducing the same.

### Background of the invention

For this purpose, the use is known, in fact, of position localizer devices, which have a readable surface by means of suitable instruments (data scanning or similar). This surface is, in particular, provided with elements, that can be detected by said instrumentation and which identify position references of the same, suitable for the construction and identification of a mathematical model. This model, which is present in a database of the instrument, serves to reproduce as faithfully as possible, the natural position of the localizer and consequently of the element connected to the same which must be localized. The elements mentioned above, which are positioned on the surface of the localizer also have a reference function, suitable for identifying and coupling this surface, actually revealed on the localizer device, with the corresponding surface of a mathematical model filed in the database of the instrument.

The scanning phase of the surface of the position localizer represents, as is known, a very difficult and delicate moment of the overall reconstruction process of the initial structure, particularly due to reading errors which do not allow the strict adherence of the surface scanned to that effectively belonging to the position localizer.

Further difficulties arise in the subsequent coupling phase of the form, thus revealed by the optical instrument, with the model filed in the database of the detector. These difficulties mainly relate to obtaining a perfect adherence of the surfaces scanned with those coming from the mathematical model present in the database, which requires correspondence between the space coordinates and their point of origin, of the actual localizer and its mathematical model, respectively.

Position localizers having a truncated-cone-shaped or cylindrical form, integrated with a reference notch, are currently known.

These localizers, however, have the drawback of offering a limited number of surface reference points, with the consequence of both generating distortions during the optical detection, and causing inaccuracies, also significant, on the coupling of these surfaces with the desired mathematical model.

Further known embodiments are identified by position localizers having a cylindrical base surmounted by a plurality of spherical bodies, the latter arranged on axes different from those of the localizer body. These devices, however, which have the advantage of introducing a larger number of reference points on the surface of the localizer, have the drawback of hindering the optical scanning phase of said surface, mainly in the case of localizers positioned with a high inclination. This drawback is even more serious if it is considered that the known devices, due to their composite structure, require the integral reading of all of their form components

(cylindrical body and spheres), and if one of these is lacking, for example due to the presence of obstacles (such as other teeth or the like) close to the localizer, the scanning provides incorrect position results.

Finally, localizers obtained from the combination of spherical forms reciprocally interconnected, are known, which have the disadvantage of substantially lacking references with respect to their angular position, references which can be inferred in all circumstances, particularly also in the presence of obstacles which do not allow their reading.

### Summary of the invention

The main objective of the present invention is to provide a position localizer device of the enhanced type, for oral, dental and maxillofacial prostheses, in respective intraoral applications and on the model, which overcomes the above mentioned drawbacks of the known art.

In particular, an objective of the invention is to provide a device of the type mentioned above, which allows the reconstruction, through the reading of the surfaces, as accurately as possible, with respect to the actual value, of both space coordinates and their point of origin.

Another objective of the invention is to provide a localizer device of the type mentioned above, which is able to effect the accurate coupling of the surfaces scanned with those of the mathematical model in the database, obtaining, for this purpose, the best possible coincidence of the space coordinates and the point of origin of these surfaces.

A further objective of the invention is to provide a new localizer device having a form suitable for eliminating any uncertainty in the reading and composition on the part of the scanning software of the detection instrument.

These and other objectives are achieved by the position localizer device for oral, dental, maxillofacial prostheses of the invention of the type having at least an outer surface which can be read by a detector suitable for determining the orientation and position in space of this surface, the device of the invention comprising:
- at least one functional detection and coupling element of its vertical position with respect to the origin of the Cartesian reference system and in the direction of its longitudinal axis;
- at least one functional detection and coupling element of both the angular position of the actual axis of said device with respect to its axis which can be read by the above-mentioned detector, and of the position of the same device on the plane of said reference system;
- at least one functional detection element of the angular position of said device of the invention, around its longitudinal axis.

According to a preferred embodiment, the device of the invention consists of a single body with a longitudinal axis and comprising a portion consisting of a body in the form of an irregular polyhedron, on whose upper polygonal side a portion is fixed in the form of a spherical body and on whose lower polygonal face there is a connection element for coupling with the interface of the element whose position is to be detected. The polyhedral body, the spherical body and the mentioned connection are positioned coaxially with respect to said longitudinal axis of the body of the same localizer.

According to the invention, said at least one functional element for the detection of the vertical position of said device with respect to the origin of said reference system and in the direction of the above-mentioned longitudinal axis is represented by the surface of the cited spherical body and edges of the polygonal sides, upper and lower respectively, of said polyhedral body.

In addition, the mentioned at least one functional element for the detection of both the angular position of the actual axis of the invention device with respect to its axis which can be read by the detector, and the position of the same device on the plane of said reference system, consist of the surface of the cited spherical body, the edges of the upper and lower polygonal sides, respectively, of said polyhedral body, and also the edges formed by the lateral sides of the latter.

The at least one functional element for the detection of the angular position of the device of the invention around its longitudinal axis consist of the lateral sides of said polyhedral body and the edges formed by these lateral sides.

According to a variant of the device of the invention, a reciprocal fixing connection between said spherical body and the above-mentioned polyhedral body, is also envisaged, wherein said connection has a peripheral outer throat having a portion, facing said spherical body, whose curvature radius is different from the curvature radius of the portion of the same connection facing the side of said polyhedral body.

According to a further embodiment variant of the device of the invention, a cylindrical body is envisaged, which coaxially fixed between said polyhedral body and said connection element, wherein said cylindrical body has edges and an upper surface, not covered by said polyhedral body, which are functional for the detection of the vertical position of the same localizer with respect to the origin of said reference system and in the direction of its longitudinal axis.

According to a preferred embodiment, the device of the invention consists of a single body comprising:
- an upper cylindrical body equipped with a corresponding edge;
- the mentioned spherical body, connected to said upper cylindrical body by means of a connection;
- said polyhedral body, connected to said spherical body by means of the mentioned connection and equipped with a notch in correspondence with one of its lateral sides;
- said lower cylindrical body connected, in the upper portion, to the mentioned polyhedral body and, on its lower side, to said connection element.

With respect to the known art considered above, the localizer of the invention offers the advantage of allowing a perfect adherence between the surfaces scanned and those belonging to the same device and the perfect coupling of the surfaces scanned with the mathematical model present in the database.

This important result is obtained thanks to the particular form of the device, which eliminates reading and composition ambiguities on the part of the scanning software, consequently avoiding distortions and approximations which can be found in traditional systems. More specifically, the combination of a spherical surface with the horizontal and vertical edges of an irregular polyhedron, avoids the formation of parts hidden from the scanning device, and aligns the scans in sequence, practically nullifying incorrect overlapping. Above all, the irregular geometrical form of the polyhedron generates adjacent angles all different from each other, consequently eliminating any ambiguity of overlapping on the part of the composition software algorithm of the solid scanned. This composition of figures confers therefore a high precision to the scanning phase of the solid, eliminating acquisition defects of the images on the part of the software.

The device of the invention also offers the advantage of effecting an accurate coupling of the scanned surfaces with those of the mathematical model in the database, obtaining to this end the best coincidence of the space coordinates and the point of origin of these surfaces. In particular the device of the invention allows the perfect adherence of the scanned surfaces with the surfaces coming from the database to be obtained, through the exact determination, on the part of the coupling algorithm, of the vertical position of the object in the database, the side position with respect to the origin and inclination of the object in the database with respect to the vertical, in addition to the rotation of the surface with respect to the origin and horizontal axis of the object in the database.

### Brief description of the drawings

These and other objectives, advantages and characteristics emerge from the following description of a preferred embodiment of the device of the present invention illustrated, as a non-limiting example, in the figures of the enclosed tables of drawings. In these:
- figure 1 illustrates, in perspective, a first embodiment of the device of the invention;
- figure 2 illustrates the device of figure 1, indicating the functional forms for detecting the position in vertical of the device with respect to the origin of the system of Cartesian axes;
- figure 3 illustrates the device of figure 1, indicating the functional forms for the side and angular detection of its position;
- figure 4 illustrates the device of figure 1, indicating the functional forms for the detection of the rotation of the device with respect to the vertical axis;
- figures 5, 6 and 7 illustrate embodiment variants of the device according to the previous figures;

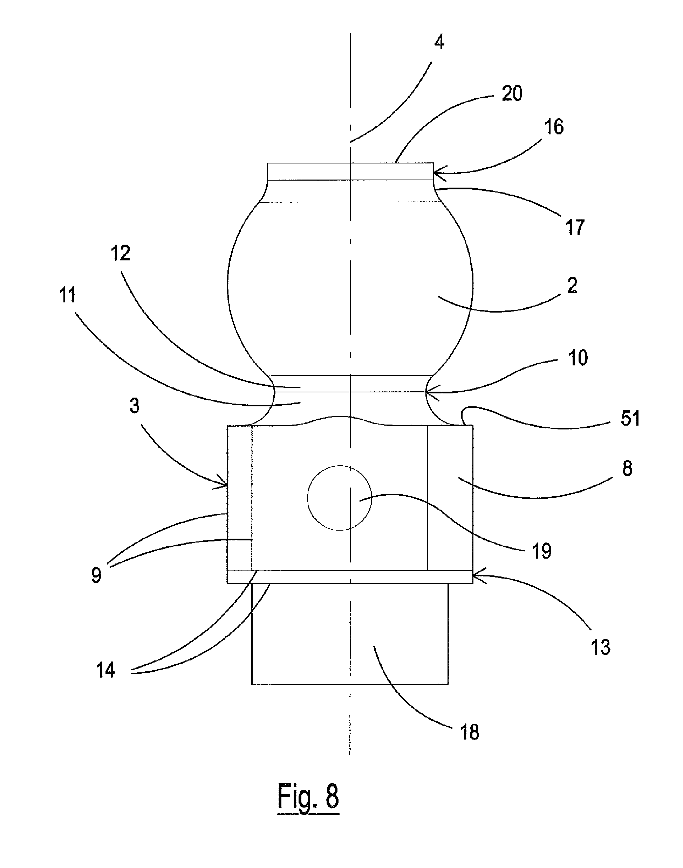

- figure 8 is a side view of the device of figure 7;
- figures 9, 10 illustrate the device of figure 7, in a section AA, and in a section BB, respectively; and

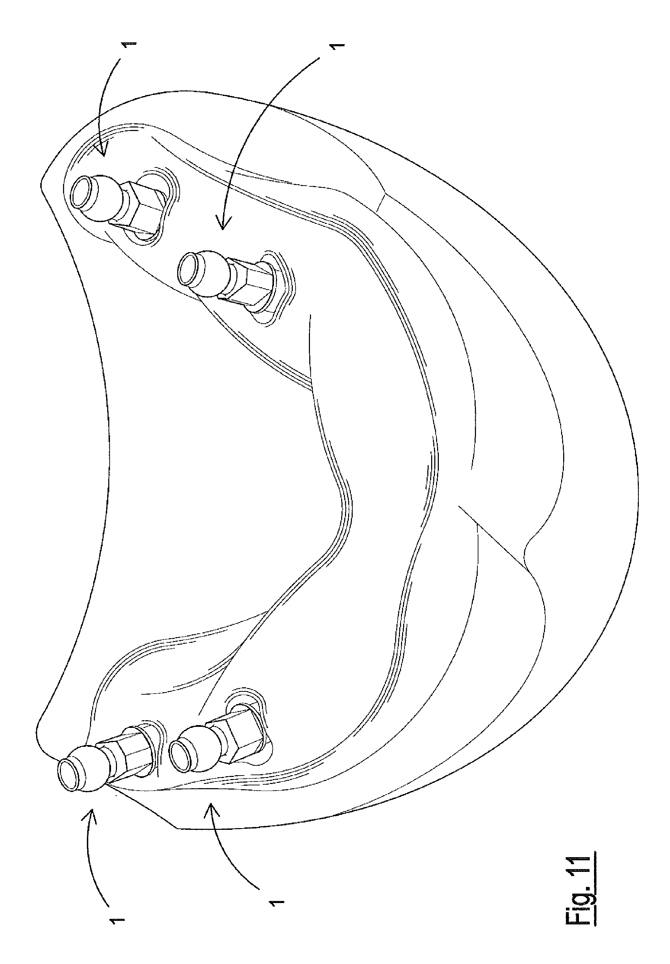

- figure 11 illustrates an example of application of the device of figure 7 to a chalk model of the mouth of a patient.

### Detailed description of the drawings

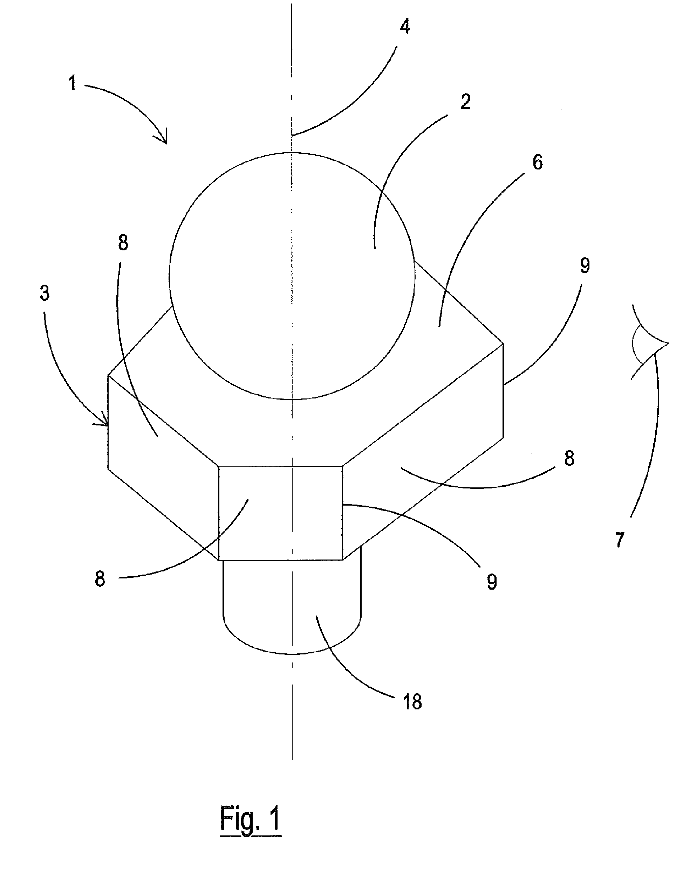

The device of the invention is indicated as a whole with 1 in figure 1. It consists of a single body, made of a rigid material and with a non-reflecting surface (for example titanium with a Teflon coating), suitable for being revealed by a detector 7 (optical scanner or similar). The body of this device 1 is, in particular, composed of an irregular polyhedric solid 3, on whose upper polygonal side 6 a spherical body 2 is fixed. Both of said geometrical solids are positioned according to the same longitudinal axis 4 of the body of the device 1. As already mentioned, the polyhedron 3 has an irregular form which, in the example illustrated in the figures, has upper and lower sides 6 as an irregular hexagon and quadrangular lateral sides 8.

A connection cylindrical element 18 is positioned at the base of the device 1, or on the lower side of the polyhedric body 3, suitable for effecting the coupling of the localizer with the interface of the respective supporting structure (not shown). The dimensions of this element are selected so as to be able to adapt it to the interfaces of the implants, maintaining the same upper portion for as many implants as possible, according to the dimensions and type of interface. The cylindrical design of this connection element was also conceived for allowing it to be held by operating pincers on tool machines during the construction of the device, without jeopardizing its accuracy.

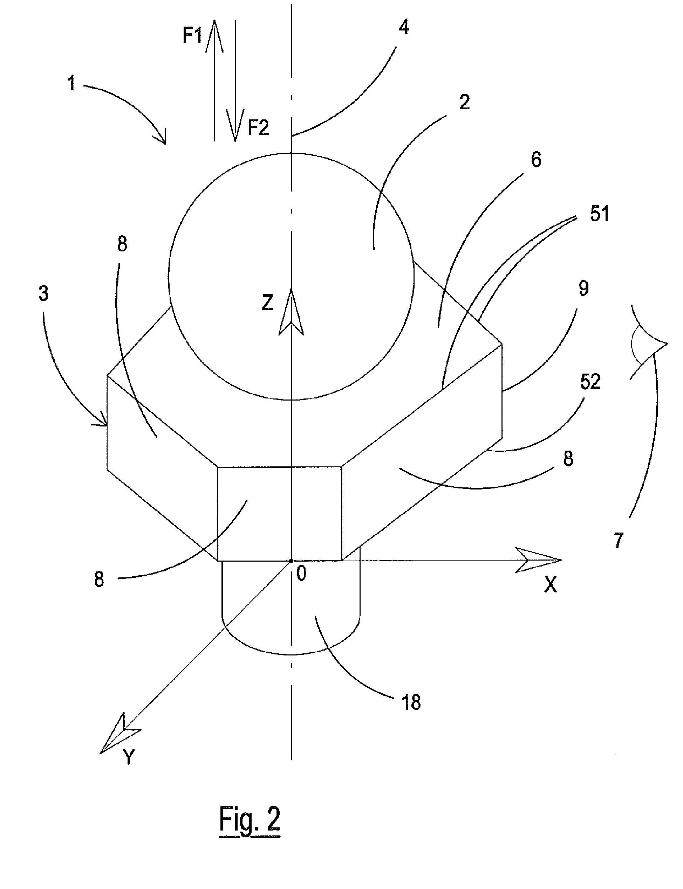

As illustrated in figure 2, the surface of the spherical body 2 and edges 51, 52 defined by the upper and lower sides of the polyhedron 3, which can be read by the detector 7, represent the functional elements for detecting the vertical position of the device 1 with respect to the origin O and in the direction of the axis Z (arrows F1,F2), the latter coinciding with the axis 4 of the same invention device. The geometrical references 2, 51, 52 described allow the error to be minimized (represented by the shifts according to the arrows F1, F2 of figure 2) of the vertical position of the device with respect to the origin.

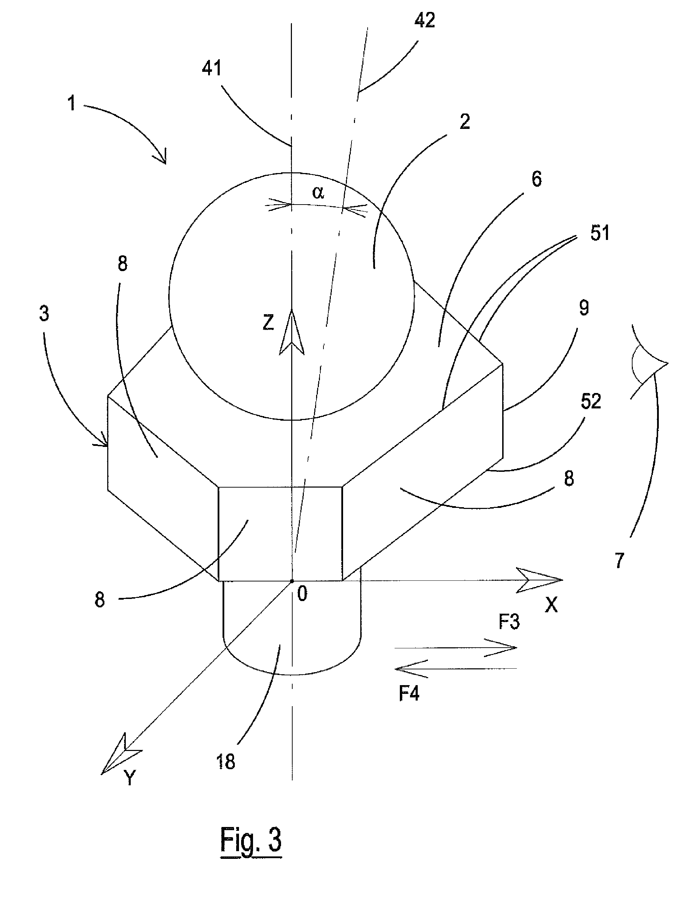

In order to reduce the error identified by the inclination or the angular shift α between the actual axis 41 of the device 1 and the axis 42 which can be read by the detector 7 (figure 3), as much as possible, the same device of the invention also exploits, in addition to the spherical surface of said body 2 and edges 51, 52 mentioned above, also one or more of the edges 9, formed by the adjacent lateral sides 8 of the polyhedron 3, which are facing the detector 7. These same geometrical references 2, 51, 52, 9 also serve for minimizing the reading errors of the position of the device 1 on the plane X, Y which, in figure 3, are indicated by the shifts according to the arrows F3 and F4.

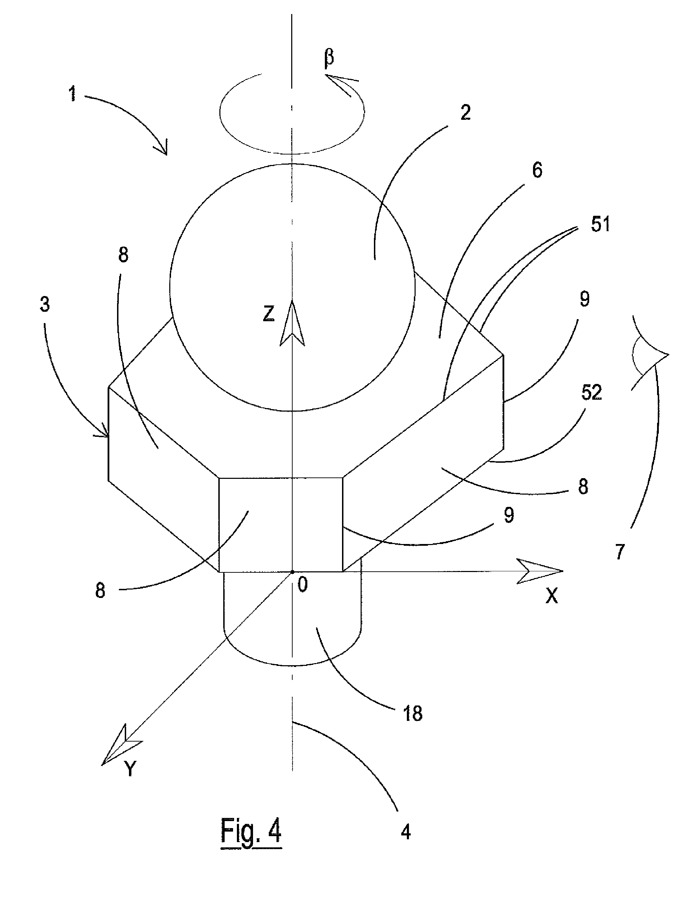

In order to reduce the reading error on the part of the detector 7 as much as possible, on the angular position β of the device 1 around its axis 4 (which, in figure 4, coincides with the axis Z), the same device exploits the reference consisting of the position of the lateral sides 8 of the polyhedron 3 and of the cited edges 9 which are read by the same detector 7.

Consequently, thanks to the detecting of the overall geometrical figure of the device 1, in particular by exploiting the cited geometrical elements of the spherical body 2, edges 9, 51, 52 and lateral sides 8 of the polyhedron 3, the reading errors concretized by the shifts F1, F2; F3, F4; α, β between the position revealed by the detector 7 and the actual position of the device 1 of the invention, are reduced to the minimum, as shown in the previous figures. This significant reduction in the reading errors of the device 1 by the detector 7, leads, in the subsequent coupling phase with the corresponding mathematical model, to an even lesser ambiguity in the interpretation of the coupling between the surface read by the detector 7 and the surface of the corresponding mathematical model.

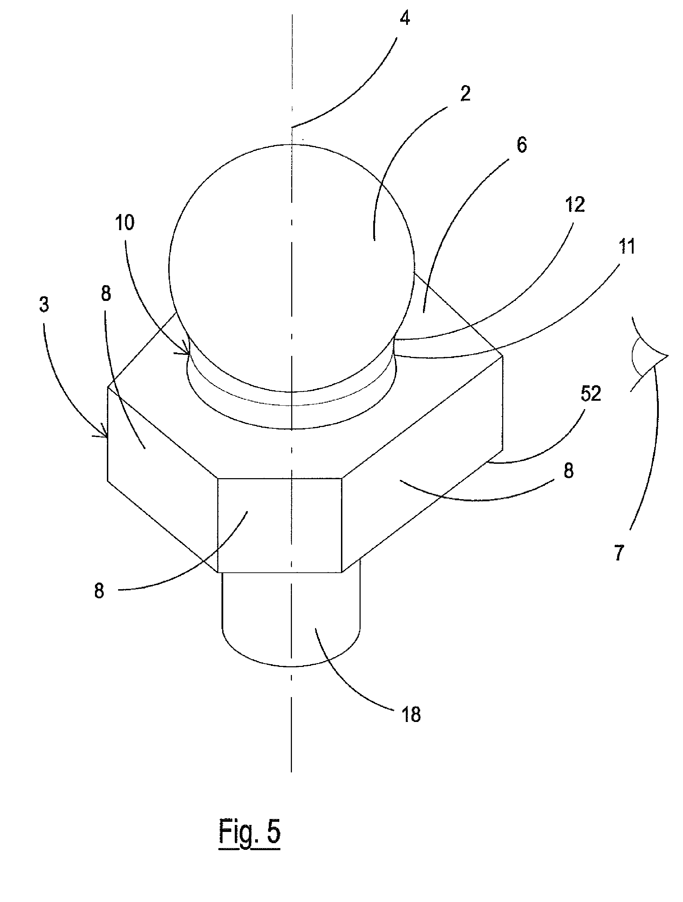

In the variation shown in figure 5, the spherical body 2 is fixed to the upper polygonal surface 6 of the polyhedron 3 by means of a connection, indicated as a whole with 10. This connection 10 substantially creates a collar having an outer peripheral throat which develops along the whole corresponding circular section of the spherical body 2. This throat is distinguished, in particular, in that it has a portion 12, on the spherical body 2 side, which has a curvature radius R1, different from the curvature radius R2 of the portion 11 of the connection 10 which is facing the polyhedron 3.

The function of the connection 10 described is to further reduce the shift or error in the reading of the vertical position of the device 1, as revealed by the detector 7, in the direction of the arrows F1, F2 of figure 2.

This result is reached, in particular, thanks to the different curvature R1, R2 of the mentioned portions 11 and 12 of the connection 10. Preferably the cited radiuses R1, R2 are also different from the radius of the outer surface of the spherical body 2.

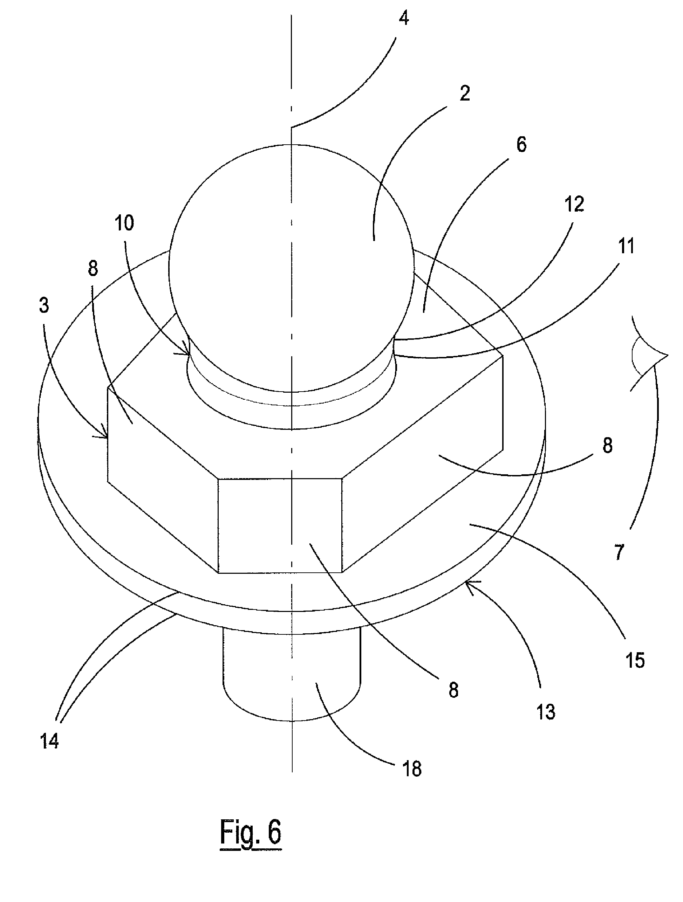

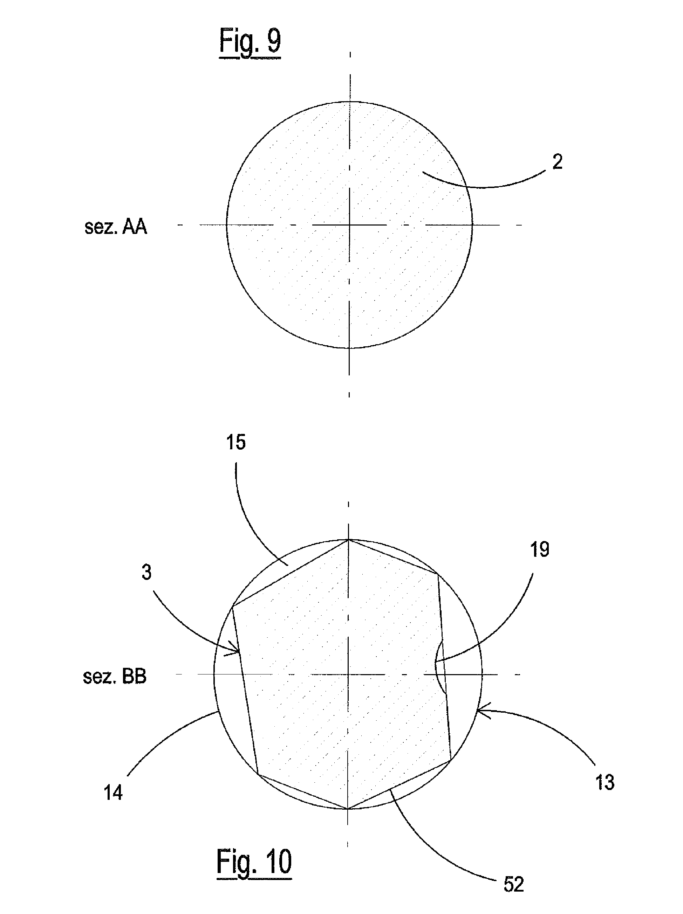

In the variation shown in figure 6, the device of figure 5 is integrated with a body 13 having a cylindrical form, situated below the polyhedron 3 and positioned according to the axis 4 of the same localizer 1. The edges 14 of this cylindrical body 13, in addition to its plane 15 not covered by the polyhedron 3 (figure 10), are functional for reducing the errors F1, F2 of figure 2.

With respect to the overall body of the cylinder 13, this contributes to minimizing the shifts F3 and F4 of figure 3.

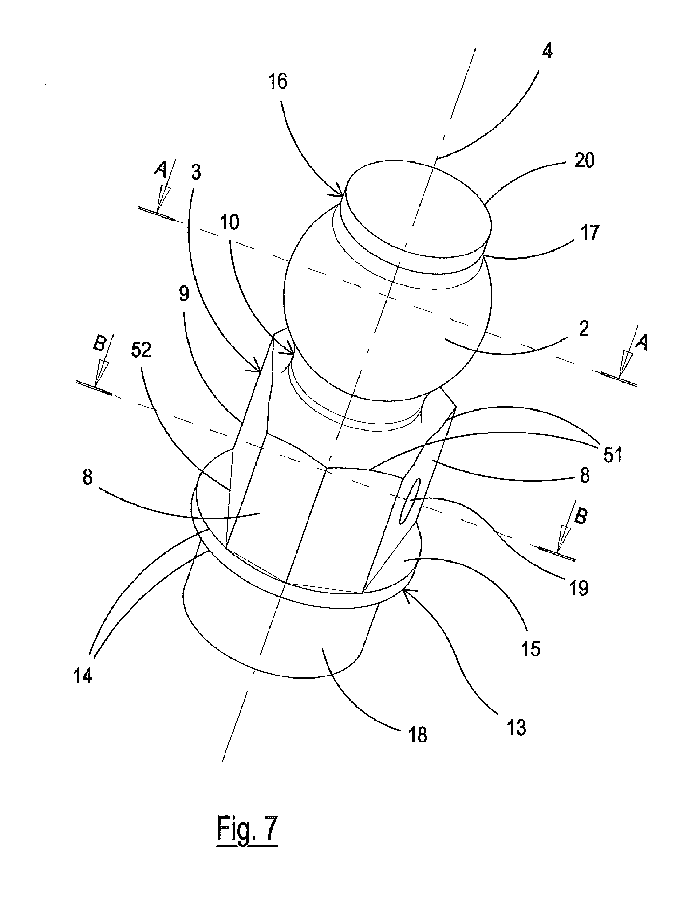

In the version shown in figure 7, the localizer of the invention consists of a single body with an axis 4, on which the following can be observed:
- an upper cylindrical body 16 with an edge 20,
- the spherical body 2 of figure 1,
- a connection 17 which connects the mentioned cylinder 16 with the spherical body 2,
- the body 3 in the form of a polyhedron shown in figure 1, integrated with a notch 19 on one of its side surfaces 8,
- the connection 10 shown in figure 5 between the spherical body 2 and polyhedron 3,
- the lower cylindrical body 13 of figure 6,
- the cylindrical connection 18 of the device shown in the previous figures.

In particular:
- for optimizing the precision of the vertical detection with respect to the origin (shifts F1, F2 of figure 2), the above-mentioned connection 17, the spherical surface of the body 2, the connection 10 between the sphere 2 and polyhedron 3, the edges 14 and 20 of the cylindrical body 13 and 16, respectively, the edges 51, 52 of the polyhedron 3 in addition to the plane 15 of the cylindrical body 13, not covered by the polygonal surface 6 of the polyhedron 3, are effective;
- for optimizing the precision of the detection with respect to the plane X, Y, and with respect to the angle α between the axis 41 and 42 (figure 3) and with respect to the angle β on the axis Z (figure 3) the mentioned upper connection 17, the spherical body 2, the connection 10 between this body 2 and the polyhedron 3, the edges 14 and 20 of the cylindrical bodies 13 and 16, respectively, and the edges 9, 51, 52 and the other side faces 8 of the polyhedron 3, are effective.

Having thus described some preferred exemplary embodiments of the device of the present invention in accordance with the principles of the present invention, it should be apparent to those skilled in the art that various additional objects and advantages have been attained by the invention and that a variety of modifications can be made within the scope of the present invention, being limited by the following appended claims only.

## Claims

1. A position localizer device for oral, dental and maxillofacial prostheses, having at least an outer surface which can be read by a detector (7) suitable for determining the orientation and position in space of said surface, **characterized in that** it has:
- at least one functional detection and coupling element of the vertical position of the mentioned device (1) with respect to the origin (O) of the Cartesian reference system and in the direction of its longitudinal axis (4) of the same device (1);
- at least one functional detection and coupling element of both the angular position (α) of the actual axis (41) of the device (1) with respect to its axis (42) which can be read by the mentioned detector (7), and also of the position of the same device (1) on the plane (X, Y) of said reference system;
- at least one functional detection element of the angular position (p) of said device (1) around its longitudinal axis (4).

2. The device according to claim 1, **characterized in that** it consists of a single body with longitudinal axis (4) and comprising a portion consisting of a body (3) in the form of an irregular polyhedron, on whose upper polygonal side (6) a portion is fixed in the form of a spherical body (2) and on whose polygonal lower side there is a connection element (18) for coupling with the interface of the respective element to be positioned, the polyhedron body (3), the spherical body (2) and the mentioned connection (18) being coaxial with respect to said longitudinal axis (4) of the body of the same localizer (1).

3. The device according to claim 2, **characterized in that** said at least one functional element for the detection of the vertical position of the mentioned device (1) with respect to the origin (O) of said reference system and in the direction of the longitudinal axis (4) of the same device (1) is represented by the spherical surface of said body (2) and by the edges (51, 52) of the polygonal sides, upper and lower respectively, of said polyhedral body (3).

4. The device according to claim 2, **characterized in that** said at least one functional element for the detection of both the angular position (α) of the actual axis (41) of the device (1) with respect to its axis (42) which can be read by the cited detector (7), and of the position of the same device (1) on the plane (X, Y) of said reference system, consist of the spherical surface of the cited body (2), the edges (51, 52) of the polygonal sides, upper and lower respectively, of said polyhedral body (3), and the edges (9) formed by the adjacent lateral sides (8) of the latter.

5. The device according to claim 2, **characterized in that** said at least one functional element for the detection of the angular position (p) of the device (1) around its longitudinal axis (4) consists of the lateral sides (8) of said polyhedral body (3) and the edges (9) formed by these adjacent lateral sides.

6. The device according to claim 2, **characterized in that** it also comprises a reciprocal fixing connection (10) between said spherical body (2) and the cited polyhedral body (3).

7. The device according to claim 6, **characterized in that** the cited connection (10) has an external peripheral throat, having a portion (12), facing said spherical body (2), whose curvature radius (R1) is different from the curvature radius (R2) of the portion (11) of the connection (10) on the side of said polyhedral body (3).

8. The device according to claim 7, **characterized in that** the cited curvature radiuses (R1, R2) are different from the radius of said spherical body (2).

9. The device according to claim 6, **characterized in that** it also comprises a cylindrical body (13) fixed coaxially between the cited polyhedral body (3) and said connection element (18).

10. The device according to claim 9, **characterized in that** said cylindrical body (13) has edges (14) and an upper surface (15) not covered by said polyhedral body (3), which are functional for the detection of the vertical position of the same localizer (1) with respect to the origin (O) of said reference system and in the direction of the longitudinal axis (4) of the same device (1).

11. The device according to claim 9, **characterized in that** it consists of a single body with a longitudinal axis (4) comprising:
- an upper cylindrical body (16) provided with an edge (20);
- the mentioned spherical body (2), connected to said upper cylindrical body (16) by means of a connection (17);
- said polyhedral body (3), connected to said spherical body (2) by means of the mentioned connection (10) and equipped, in correspondence with one of its lateral sides (8), with a notch (19);
- said lower cylindrical body (13) connected, in the upper portion, to the mentioned polyhedral body (3) and, on its lower side, to said connection element (18).

12. The device according to claim 11, **characterized in that** it comprises:
- at least one functional element for the detection of the vertical position of the device (1) consisting of the cited connections (10, 17), the spherical surface of the body (2), the edges (13, 14, 20, 51, 52) and the cited plane (15) of the cylindrical bodies (13, 16);
- at least one functional element for the detection of said angular positions (α, β) and the cited position on the plane (X, Y) of the device (1), said at least one element consisting of the mentioned connections (10, 17), the spherical surface of the body (2), said edges (9, 13, 14, 20, 51, 52) and the lateral sides (8) of the cited polyhedral body (3).

13. The device according to one or more of the previous claims, **characterized in that** said polyhedral body (3) has upper and lower sides (6) as an irregular hexagon and polygonal lateral sides (8).
